# EUROPEAN PATENT SPECIFICATION

(11) **EP 4 010 848 B1**
(45) Date of publication and mention of the grant of the patent: **26.11.2025**
(21) Application number: 19858654.7
(22) Date of filing: 18.12.2019
(51) Int. Cl.: G06N 3/063, G06N 3/045

(54) **PARAMETER CACHING FOR NEURAL NETWORK ACCELERATORS**
PARAMETER-CACHESPEICHERUNG FÜR NEURONALE NETZWERKBESCHLEUNIGER
MISE EN ANTÉMÉMOIRE DE PARAMÈTRES POUR ACCÉLÉRATEURS DE RÉSEAUX NEURONAUX

(43) Date of publication of application: 15.06.2022
(73) Proprietor: Google LLC, Mountain View, CA 94043 (US)
(72) Inventor: LIU, Jack, Mountain View, CA 94043 (US); WOO, Dong Hyuk, Mountain View, CA 94043 (US); PARK, Jason Jong Kyu, Mountain View, CA 94043 (US); ASHOK, Raksit, Mountain View, CA 94043 (US)
(74) Representative: Marks & Clerk GST
(86) International application number: PCT/US2019/067289
(87) International publication number: WO 2021/126194

(56) References cited:
- WO-A1-2018/212799
- WO-A1-2019/032808
- SHIJIE LI ET AL: "A Novel Memory-Scheduling Strategy for Large Convolutional Neural Network on Memory-Limited Devices", COMPUTATIONAL INTELLIGENCE AND NEUROSCIENCE, vol. 2019, 28 April 2019 (2019-04-28), US, pages 1 - 12, XP055643810, ISSN: 1687-5265, DOI: 10.1155/2019/4328653

## Description

### BACKGROUND

This specification relates to a parameter caching technique for neural network layer computation on neural network hardware accelerators.

Neural networks are machine learning models that employ one or more layers to generate an output, e.g., a classification, for a received input. Some neural networks include one or more hidden layers in addition to an output layer. The output of each hidden layer is used as input to another layer in the network, e.g., the next hidden layer or the output layer of the network. Each layer of the network generates an output from a received input in accordance with current values of a respective set of parameters.

A respective set of parameters are stored in the memory of neural network hardware accelerators. Upon a completion of the parameters transition to the computing units of the neural network hardware accelerator, a neural network layer computation, e.g., a convolutional layer computation, executes through multiplication of an input tensor and the stored set of parameters on the computing units of the neural network hardware accelerator.

WO 2018/212799 A1 (GOOGLE LLC [US]) 22 November 2018 (2018-11-22) describes processing a batch of neural network inputs using a hardware circuit.

SHIJIE LI ET AL: "A Novel Memory-Scheduling Strategy for Large Convolutional Neural Network on Memory-Limited Devices",COMPUTATIONAL INTELLIGENCE AND NEUROSCIENCE, vol. 2019, 28 April 2019 (2019-04-28), pages 1-12,US ISSN: 1687-5265, DOI: 10.1155/2019/4328653 describes a memory-management strategy for deploying large CNNs on memory-limited devices.

### SUMMARY

The invention is defined by the independent claims. Embodiments of the invention are defined by the dependent claims.

### BRIEF DESCRIPTION OF THE DRAWINGS

FIG. 1 is a block diagram of an example neural network processing system.
FIG. 2 is a diagram of an example neural network hardware accelerator for neural network computation.
FIG. 3 is an example flow chart of process for performing parameter caching on the neural network hardware accelerator.
FIG. 4 is an example flow chart of process for performing parameter caching for fully connected neural network layer computation on the neural network hardware accelerator.
FIG. 5 is an example flow chart of process for performing parameter caching for convolutional neural network layer computation on the neural network hardware accelerator.

Like reference numbers and designations in the various drawings indicate like elements.

### DETAILED DESCRIPTION

Neural network hardware accelerators are typically used to perform operations or computations more efficiently for neural network layer computation.

A high-performance hardware accelerator, e.g., a Tensor Processing Unit (TPU), has one or more wide memories located on the computing units of the accelerator. Each wide memory may have local storage capacity, e.g., an 8 MB memory, to cache the instructions and parameter data for neural network layer computation. In general, a small portion of the capacity of wide memory on the computing unit is firstly reserved for the model's inference executables, and then the parameter data is stored in whatever space remains. For example, neural network model parameters need to be stored in the computing units' wide memories before a neural network computation executes. In many circumstances, the model parameters are loaded from a host interface of the neural network processing system to the local memory of corresponding computing units, e.g., computing units. Upon the execution of a neural network layer that requires the corresponding model parameters, the neural network processing system will issue an instruction to transmit the model parameters from the parameter memory to a receiver computing unit of the hardware accelerator through a ring bus. The receiver computing unit, based on an issued operation instruction, will then copy the model parameters from the ring bus to its wide memory.

The aforementioned parameter transition may not provide the best neural network processing system efficiency and neural network hardware accelerator memory utilization. There may be abundant wide memory capacity of the computing units of the accelerator that is underutilized during the neural network layer computation. Furthermore, the external parameter memory may have lower bandwidth compared to the bandwidth of the wide memory on the computing units, which may cause a computation halt while waiting for data transition.

In this specification, a parameter caching technique is described for high-performance neural network layer computation on hardware accelerators. This parameter caching technique includes obtaining data specifying one or more neural network layers to be deployed on one or more computing units of the neural network accelerator, determining a maximum amount of the wide memory capacity that will be in use at any one time during a processing of any of the one or more neural network layers, and identifying a subset of the parameters that consumes less memory compared to the available wide memory capacity on the computing units. The model parameters are stored in the wide memories of the hardware computing units of the neural network hardware accelerator before the neural network computation executes. More particularly, the wide memory located on the computing units of the accelerator may be compiler-allocated scratchpad memory. The accelerator compiler may be configured to add a small amount of executables inside the model that writes a specific amount of parameter data to the wide memories of the computing units on the accelerator before running an inference. This parameter caching technique enables faster inferencing speed compared to fetching the parameter data from external parameter memory, which was described earlier.

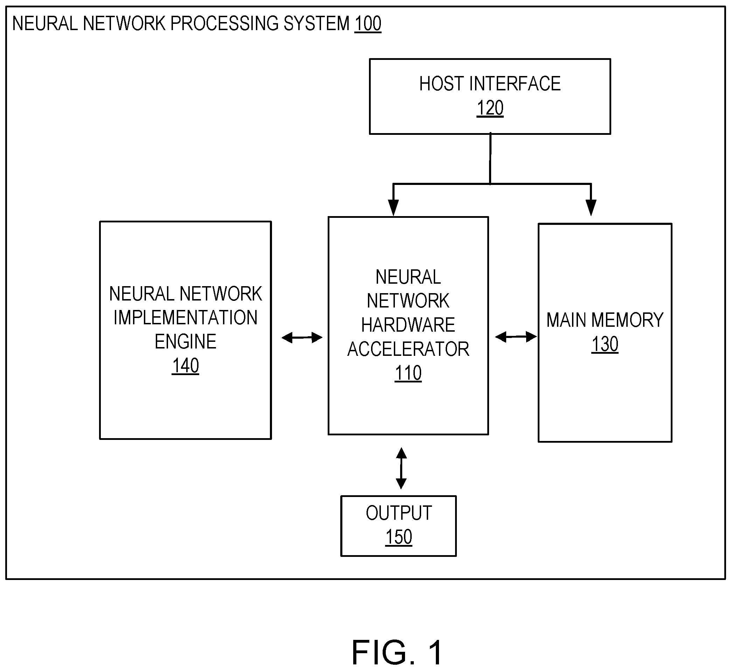

FIG. 1 shows a block diagram of an example neural network processing system 100. As shown in FIG. 1, the neural network processing system 100 includes a neural network accelerator 110, a host interface 120, a main memory 130, a neural network implementation engine 140, and an output 150. The neural network processing system 100 may include two or more memories, to store data and instructions for neural network computation.

In the neural network processing system 100, the host interface 120 receives and delivers parameters and instructions to the neural network hardware accelerator 110 and the main memory 130. The parameters may include the weights and biases of the neural network layers. The host interface 120 may also send the instructions to the neural network hardware accelerator 110, which executes the instructions that control the neural network hardware accelerator 110 to perform the neural network computations. In some implementations, the transferred instructions regulate dataflow in the neural network hardware accelerator, e.g., how the sets of feature inputs and the sets of filter inputs flow through the circuit.

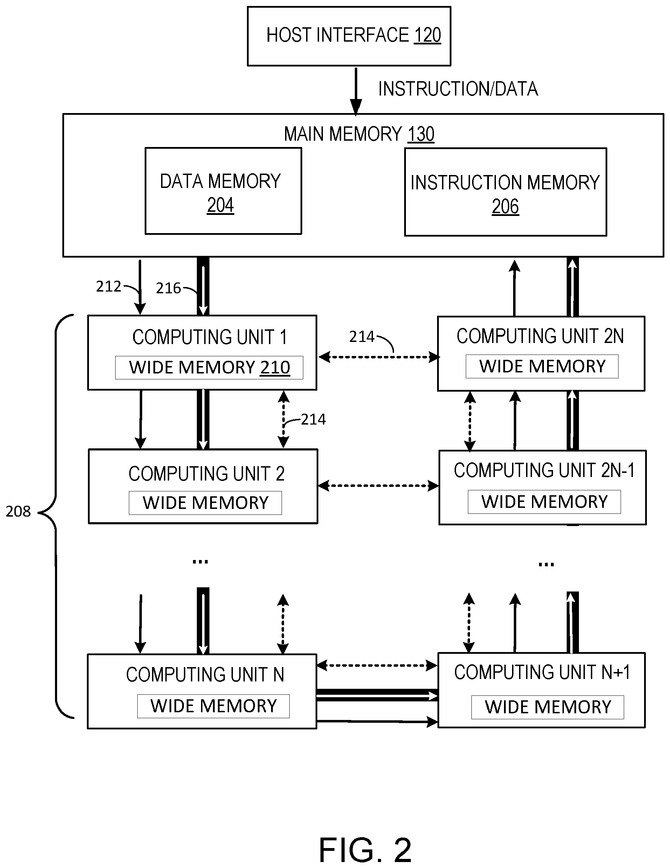

The neural network processing system 100 is a system that performs neural network computations using a neural network hardware accelerator 110. The neural network hardware accelerator 110 is an integrated circuit for performing neural network computations and includes one or more computing units that perform matrix multiplications in the hardware accelerator. The computing units of the neural network hardware accelerator 110, e.g., the hardware processing units, may also be configured to perform vector multiplications. In some implementations, the neural network accelerator 110 receives task instructions and performs multiply operations that can include multiplying an activation with a weight or other parameters to produce outputs, for example, a partial sum or an output activation, to the output 150. In some other implementations, the neural network hardware accelerator 110 processes at least one of a tensor operation instruction or a direct memory access operation instruction. In this example, the neural network hardware accelerator 110 may be configured to execute at least one tensor operation instruction and at least one direct memory access operation instruction to perform tensor computations that include multiple linear algebra computations. An example neural network hardware accelerator 110 and the hardware computing units are described in more detail below with reference to FIG. 2.

In the neural network processing system 100, the neural network accelerator 110 is configured to process neural network computations, e.g., matrix multiplication or vector computation, by executing the instructions or parameters that transferred from the host interface 120 or stored in the main memory 130. The main memory 130 may include one or more memory banks or units, for storing parameters, activations and weights used to process neural network computations for a given neural network layer. In some implementations, the main memory 130 is a volatile memory unit or units. In some other implementations, the main memory 130 is a non-volatile unit memory unit or units such as, for example, read-only memory (ROM) and/or electrically erasable programmable read-only memory (EEPROM). The main memory 130 may also be another form of computer-readable media, such as a floppy disk device, a hard disk device, an optical disk device, a tape device, a flash memory or other similar solid state memory device, or an array of devices including devices in a storage area network or other configurations. In the main memory 130, parameters or activations can be pre-loaded to respective memory address locations that correspond to elements of an input tensor, to perform computations for a neural network layer. Likewise, weights and other parameters can be pre-loaded to the main memory 130 in respective memory address locations that correspond to elements of a weight tensor or others.

In general, when the neural network accelerator 110 executes one or more instructions for accessing a particular element of a tensor, it determines the memory address of the element, such that the neural network hardware accelerator 110 may access main memory 130 to read data representing the value of the particular element. For example, parameters stored in main memory 130 may include parameters for a fully connected neural network layer computation or parameter for a convolutional neural network layer computation. To implement a neural network on the neural network hardware accelerator 110, the neural network processing system 100 includes a neural network implementation engine 140 that is implemented as one or more computer programs on one or more computers in one or more physical locations. The neural network implementation engine 140 generates instructions that, when executed by the neural network hardware accelerator 110, cause the neural network hardware accelerator 110 to perform the operations specified by the neural network to generate a neural network output 150.

FIG. 2 shows a block diagram of an example neural network hardware accelerator 110 for neural network computations. The neural network hardware accelerator 110 generally includes distributed hardware computing units, for the neural network computations. Each of the distributed computing units in the computing unit sets 208 has one or more wide memory 210. The neural network hardware accelerator also includes instruction bus 212, mesh bus 214 and ring bus 216 for the transitions of instructions and parameters to the hardware computing unit sets 208, respectively. As shown in FIG. 2, the main memory 130 includes a data memory 204 and an instruction memory 206 to store the parameters and instructions that are transmitted from the host interface 120. The main memory 130 is configured to execute one or more instructions relating to neural network layer computations in the neural network hardware accelerator 110, including instructions stored in instruction memory 206. The instruction memory 206 may store one or more machine readable instructions that are executable by the one or more processors of main memory 130. The data memory 204 may be any of a variety of data storage media for storing and subsequently accessing a variety of data relating to computations that occur within the neural network hardware accelerator 110.

As described earlier on FIG. 1, the host interface 120 is connected to the main memory 130, and configured to provide computing unit instructions and parameters to the main memory 130. In some implementations, computing instructions can be provided to one or more hardware computing units in neural network computing hardware accelerator 110 through the instruction bus 212, and model parameters can be provided to one or more hardware computing units in neural network hardware accelerator 110 through the ring bus 216. In some implementations, the computing instructions and model parameters are received by the main memory 130 from the host interface 120 at an initial time and stored in instruction memory 206 and data memory 204, respectively, for execution by the neural network hardware accelerator 110 at a later time.

In general, a hardware computing unit in the computing unit sets 208 is a distributed computation core within the neural network hardware accelerator 110, and is the focal point for neural network computations, for example, tensor computation. Each computing unit is an individual computing hardware that cooperates with other computing units in the computing unit sets 208 to accelerate neural network computations across one or more neural network layers. Although the computing units can share execution of tensor computations associated with a given computing unit instruction, an individual computing unit is a self-contained computational component configured to execute a subset of tensor computations independently relative to other corresponding computing units in the computing unit sets 208. FIG. 2 presents an example N x 2 computing unit layout, with 2N - 4 edge computing units are computing units with only three neighbor computing units and 4 corner computing units are computing units with two neighbor computing units. Regarding data flow methodology via mesh bus 214, in general, every input activation that arrives via mesh bus 214 for a particular computing unit must be committed to one or more wide memory 210 of the computing unit.

Instruction bus 212 originates from the main memory 130 and provides communications coupling through a bus data path that connects computing units in computing unit sets 208 in a ring back to the main memory 130. In some implementations, the main memory 130 broadcasts one or more computing instructions via the instruction bus 212.

Within the computing unit sets 208, there may be a bus stop associated with instruction bus 212 configured to examine a header bitmap to determine the instruction types. The computing instruction may be received by the computing unit and subsequently written to an instruction buffer of the computing unit prior to execution of the computing instruction by the computing unit. The instruction buffers may include a first-in first-out (FIFO) control scheme that prioritizes consumption of one or more related computing instructions. Thus, under this FIFO control scheme, computing instructions of the same type/subtype will always be executed in the order in which the computing unit instruction arrived on the instruction bus.

The mesh bus 214 provides a data communication path that between the adjacent computing units in the computing unit sets 208 in both lateral and vertical dimensions. In various implementations, mesh bus 214 may be used to transport input parameters, for example, activation quantities, between one or more wide memories 210 in adjacent computing units. As shown in FIG. 2, mesh bus 214 is not configured to allow direct forwarding of input data to non-adjacent computing units.

The ring bus 216 originates from main memory 130 and provides communications coupling through a bus data path that connects computing unit sets 208 in a ring back to the main memory 130. In various implementations, the ring bus 216 generally connects or couples wide memory 210 units of all computing units in the computing unit sets 208. Thus, a payload width of ring bus 216 corresponds to the width of the wide memory 210 disposed within each computing units. Furthermore, the ring bus 216 may include a bitmap header indicating the computing units that need to consume the computing instructions and model parameters communicated via ring bus 128.

In some implementations, the main memory 130 may be used to pop the data from ring bus stops and forward the data to a ring bus stop in a next computing unit in the ring. In various implementations, the wide memory 210 of each computing units in the neural network hardware accelerator 110 is a single-ported single-banked memory within each computing unit of the computing unit sets 208. The main memory 130 may cause the data to be committed to one or more wide memory 210 units of the computing unit if such action is required by instructions in the bitmap header. The address of the one or more wide memory 210 units to which the data needs to be written may be generated by direct memory access operation instructions within the particular computing unit.

Each computing unit in the computing unit sets 208 can either be a producer of data or a consumer of data. When a computing unit is a producer of data, the computing unit reads the data from one or more of its wide memory 210 and multicasts the data over ring bus 216 for consumption by one or more adjacent computing units. When a computing unit is a consumer of data, the computing unit receives and writes the data to one or more wide memory 210 of the computing units and forwards the data for consumption by one or more other computing units. Regarding the movement of data via ring bus 216, there typically will only be one producer/master data transition on ring bus 216 at any given time. The direct memory access operation instruction execution order (e.g., FIFO control scheme) in all computing units will ensure there is only one producer/master data transition on ring bus 216 at a given time to avoid data transition conflicts.

In various implementations, it is required to ensure there is only one producer/master of data on ring bus 216 at a given time when there are local multicast groups connected via ring bus 216 that do not have an overlapping region on the ring bus 216. An important requirement of this dual master multicast methodology is that different multicast groups must not be allowed to see each other's data packets because packet overlapping may occur and lead to one or more data computation errors.

In various implementations, the neural network processing system 100 performs operations as follows. The host interface 120 provides one or more instructions to the main memory 130 and defines one or more direct memory access operations that occur for a given neural network computation. Descriptors associated with instructions fed to the main memory 130 include information required to facilitate large scale neural network computations associated with the hardware computing unit sets 208. In general, the main memory 130 receives, from the host interface 120, computing unit instructions or model parameters (i.e., input activations, computing unit instructions, and model weights) for executing neural network computations for a particular layer of a neural network. The main memory 130 may then cause the instructions or model parameters to be multicast to the computing units in a data flow manner defined by the instructions. As discussed above, the computing units consuming an instruction may then initiate a broadcast of a new/subsequent instruction to another computing unit based on bitmap data in the instruction header.

In various implementations, the model parameters may be stored in one or more wide memories 210 of the computing units, before a neural network computation can operate in the neural network hardware accelerator 110. In some implementations, when the host interface 120 transfers the parameters to the neural network hardware accelerator 110, the main memory 130 receives and writes the parameters to its data memory 204. Upon the execution of neural network computation for a particular neural network layer, the host interface 120 will provide an issued instruction, e.g., a RingInfeed instruction. The issued instruction initiates the operations to transfer the parameters from the data memory 204 to particular computing units within the computing unit sets 208, via the ring bus 216 and the mesh bus 214. The particular receiver computing units then issue a direct memory access operation instruction to receive and write the transferred parameters from the ring bus 216 to its one or more wide memories of the receiver computing units.

Regarding the data storage in the neural network hardware accelerator 110, each computing units of the computing unit sets 208 may store a subset of the input instructions and parameters needed to compute a subset of output activations that are assigned to the particular computing unit. A neural network computation begins when required input activations, parameters/weights and computation instructions are available in the computing units. The computation ends in the computing units when all the computation operations defined by the instruction set are completed and pre-activation functions are applied to the results (i.e., output activations) of the neural network computation.

In general, as described earlier, the parameters need to be transmitted and stored in one or more wide memories 210 of the computing units, before executing a neural network computation instruction. The parameters may be loaded through host interface 120 to the data memory 204 within the main memory 130. Upon an execution of a neural network layer that required the parameters, the neural network layer issues an instruction to transmit model parameters from the data memory 204 to the one or more particular computing units through the ring bus 216.

This application presents a method to cache the parameters to the neural network hardware accelerator 110 before executing any input neural network layers. This parameter caching utilizes abundant bandwidth of wide memory 210 to improve the system efficiency and utilization for high-performance neural network computations, and is introduced more in details in following figures.

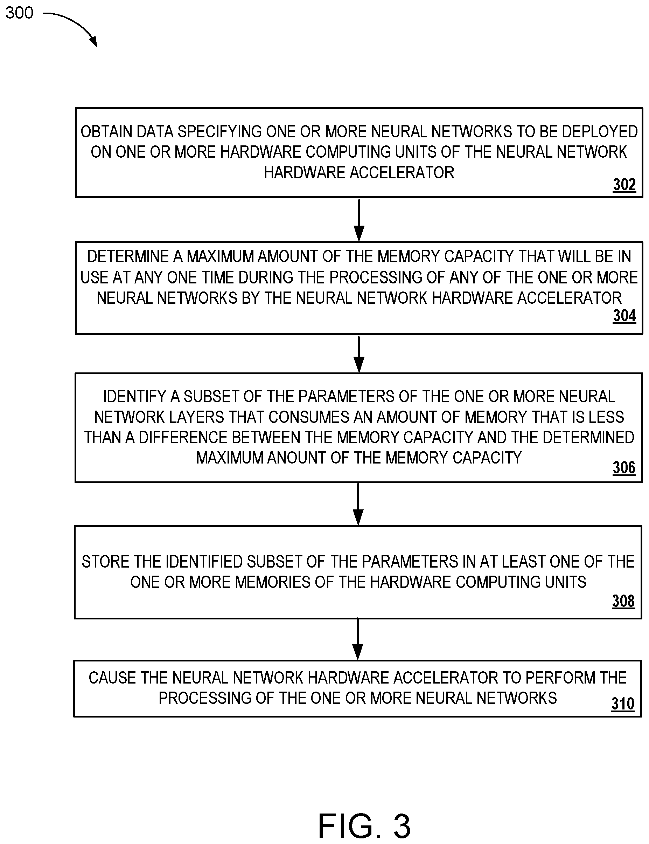

FIG. 3 is an example flow chart of process for performing parameter caching on the neural network hardware accelerator. This example may be performed using the neural network hardware accelerator 110 of FIGS. 1 and 2.

The neural network hardware accelerator 110 obtains data specifying one or more neural network layers to be deployed on one or more computing units of the neural network hardware accelerator 110 (step 302). Each of the one or more neural network layers have a respective set of parameters, and the neural network hardware accelerator 110 has one or more memories having a memory capacity. The set of parameters may be weights and biases of the neural network. The memories of the neural network hardware accelerator may be the one or more wide memories 210 on the computing units of the computing unit sets 208. In some implementations, the host interface 120 receives the instructions of executing a particular neural network layer and the model parameters on the neural network hardware accelerator 110. The computing instruction and model parameters are transmitted to the main memory 130, and stored in the instruction memory 206 and data memory 204, respectively.

In the next step, the neural network processing system 100 determines a maximum amount of the wide memory 210 capacity that will be in use at any one time during a processing of any of the one or more neural network layers by the neural network hardware accelerator 110 (step 304). In particular, the main memory 130 may determine the amount of available capacity of wide memory 210 of each computing unit in the computing unit sets 208 during a processing of one or more neural network layers. In various implementations, the computing units may have abundant wide memory 210, e.g., an 8MB memory, which is underutilized during the neural network computation. In addition, the wide memory 210 of the computing units may provide higher bandwidth than that of the main memory 130.

The neural network processing system 100 identifies a subset of the parameters of the one or more neural network layers that consumes an amount of memory less than a difference between the memory capacity and the determined maximum amount of the memory capacity (step 306). In this illustration, the neural network processing system 100 identifies a subset of the parameters for neural network computations in one or more computing units in the computing unit sets 208, by splitting the parameters based on the amount of one or more computing units and the available capacity of wide memory 210 of the one or more computing units. the neural network processing system 100 may also identify a subset of the parameters that correspond to one or more particular neural network layers, and send the subset of the parameters to one or more computing units of the computing unit sets 208 to perform neural network computations, e.g., convolutional computations.

In the next step, the neural network hardware accelerator 110 stores the identified subset of the parameters in at least one of the one or more wide memories 210 of the hardware computing units (step 308). In some implementations, the parameters are transmitted from the data memory 204 to one or more particular computing units of the computing unit sets 208 via the ring bus 216. As described earlier, the ring bus 216 may include a bitmap header indicating the one or more computing unit that need to consume the data comprising computing unit instructions and model parameters. Upon receiving the instructions, the one or more receiving computing units will zero (i.e., clear out) position data indicated in the bitmap header that is unique to the receiving computing unit, before forwarding the parameter data on to other adjacent computing units. In various implementations, the bandwidth of the ring bus 216 corresponds to the bandwidth of the wide memory 210 disposed on computing unit sets 208.

In some implementations, when the neural network computation instructions are executing, the neural network processing system 100 may issue direct memory access operation instructions to one or more host computing units in the computing unit sets 208, so as to send the parameters stored in the host computing units to other receiver computing units through the ring bus 216 or mesh bus 214. As a response, the receiver computing units may issue the direct memory access operation instruction to copy the parameter transmitted from ring bus 216 to its wide memory 210. After storing the identified subset of parameters to the corresponding computing units, the neural network hardware accelerator starts to execute neural network computations corresponding to the particular neural network layers (step 310).

In this illustration, the neural network may be made of multiple convolutional layers consisting of filters, non-linear threshold, and pooling operations. Once desired number of convolutional layers are configured, the output is then vectorized and passed through a fully connected layer, after which the desired output is produced. A convolutional layer usually has fewer parameters as compare to that of a fully connected layer. A fully connected layer produces a same output size and does not use a bias for the neural network computation. In various implementations, a neural network may contain one or more fully connected layers sharing an amount of parameters for computation at one or more computing units of the neural network hardware accelerator 110.

In some implementations, a parameter caching class may be created and deployed to support the described parameter caching task in the neural network hardware accelerator system 110. For example, given an available wide memory 210 in each computing unit, the parameter caching class may traverse each neural network layer, and determine the wide memory 210 usage in each computing units for parameters caching. The implementation of parameter caching is in a first-come-first-serve manner. In some other examples, the implementation of parameter caching is fine-tuned for tasks that are more complicated.

For a given neural network layer, it is preferable to allocate its model parameters in a single computing unit. This configuration will reduce the instruction count on performing the corresponding neural network computation and simplify the management of the synchronization flag of the neural network hardware accelerator 110.

In neural network processing system 100, compiler support is enabled for parameters caching. For example, a code generator may generate two programs: one program to load parameters from host interface 120 to the wide memory 210 of the computing units, and another program to execute an existing model of a neural network layer. The run-time may use various functions to get the corresponding binaries of these two programs. In some implementations, the required parameter caching are not ordered contiguously. For example, there may be five neural network layers with corresponding model parameters for neural network computation. The execution order of these five layers are:
A → B → C →D →E
If layers A, C, and E have parameters cached, then there is a need to generate five direct memory access descriptors to cache the parameters. In an alternative way, the parameter packing can be ordered as
A → C → E → B → D
wherein only one direct memory access descriptor is needed for parameter packing in a sequence of A → C → E, and another direct memory access descriptor is used for parameter packing of non-cached parameters in a sequence of B → D.

As descripted earlier, there is only one host computing unit that is allowed to send out parameters through the ring bus 216. In a case of two or more host computing units are sending parameters simultaneously to a same receiver computing unit through the ring bus 216, the receiver computing unit could get wrong parameters, and data packages with no active receiver computing units will float in the ring bus 216 and cause system hang.

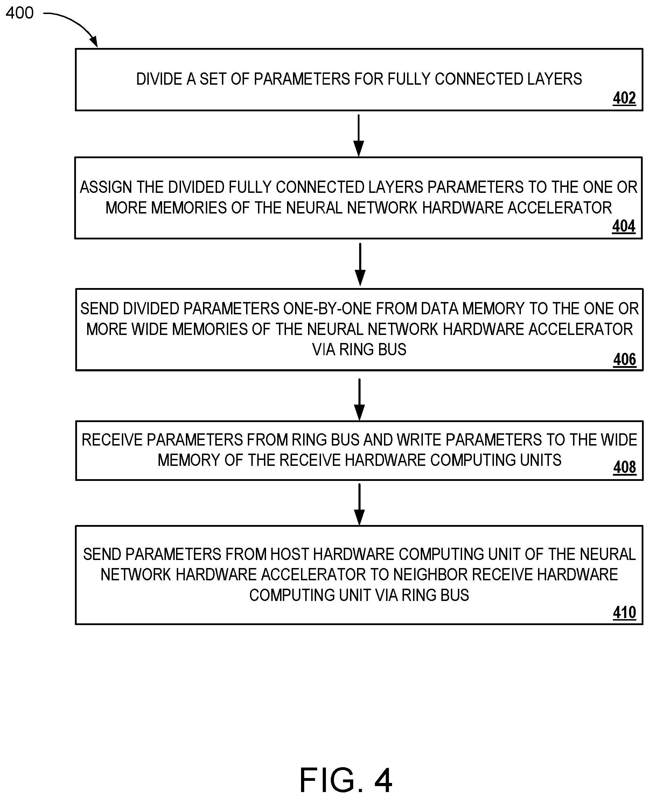

FIG. 4 is an example flow chart of process for performing parameter caching for fully connected neural network layer computation on the neural network hardware accelerator 110.

The neural network hardware accelerator 110 obtains data specifying one or more fully connected layers of the neural network to be deployed on one or more computing units of the neural network hardware accelerator 110, wherein each of the fully connected neural network layers share a respective set of parameters. The host interface 120 receives the instructions of executing one or more fully connected neural network layers and the model parameters. The instructions and model parameters are transmitted to the main memory 130, and stored in the instruction memory 206 and data memory 204, respectively.

The neural network processing system 100 divides the set of parameters for the computation of fully connected layers on the neural network hardware accelerator 110 (step 402). In various implementations, the neural network processing system 100 identifies a subset of the set parameters for fully connected layer computations that correspond to a computing unit in the computing unit sets 208, by splitting the parameters based on the amount of corresponding computing units and the available wide memory 210 capacity of the corresponding computing units. The neural network processing system 100 may have a global view on the parameters corresponding to the neural network layers and models. It will determine the available capacity of wide memory 210 in each computing unit, and invoke parameter caching method to allocate wide memory 210 for the parameter caching.

In some implementations, based on no single computing unit being available to store the set of parameters into its wide memory 210, the parameter may be split in Zout block granularity and distributed across various computing units. An ultimate optimization may be achieved by maximizing the parameter caching efficiency in terms of the capacity of wide memory 210. For example, a specific model may have a fully connected layer with 1MB parameters. However, the available wide memory 210 of each computing unit is smaller than 1MB, thus the model parameter does not fit in a single computing unit of the neural network hardware accelerator 110. As a result, the fully connected layer's parameter will be divided and cached to different computing units. In some implementations, the divided parameters are distributed to particular computing units to improve the tensors computation efficiency, and there is no need to unicast the divided parameters across the hardware computing unit set 208.

In the next step, the neural network processing system 100 assigns the divided subsets of fully connected layers parameters to the one or more wide memories 210 of the one or more computing units on the neural network hardware accelerator 110 (step 404).

The neural network hardware accelerator 110 sends the divided parameters one-by-one from the data memory 204 to the one or more wide memories 210 of the identified one or more computing units via ring bus 216 (step 406). In various implementations, the fully connected neural network layers issue a RingInfeed instruction to transmit the subset of the parameters from the data memory 204 to the one or more particular computing units for executing of the corresponding neural network computation, through the ring bus 216.

In the next step, the receiver computing units of the computing unit sets 208 receive the subset of parameters and write the parameters to the one or more wide memories 210 of the computing units (step 408). The neural network processing system 100 may issue direct memory access operation instructions to one or more host computing units for storing parameters from the host computing units to other adjacent receiver computing units, through the ring bus 216 or the mesh bus 214. As a response, the receiver computing units may issue a direct memory access operation instruction to copy the parameter transmitted from host computing units to its wide memory 210 (step 410).

After storing the identified subsets of parameters to the corresponding computing units, the neural network hardware accelerator 110 starts to execute neural network computations corresponding to the one or more fully connected neural network layers. In various implementations, a particular neural network layer may have more than one models pending for parameter caching. Instructions indicating a list of the models in descending priority order may be sent through the host interface 120 to the main memory 130 of the hardware computing units for execution. In response to the instructions, models that are more important may be processed earlier to have the corresponding parameters cached in the wide memory 210 of one or more computing units.

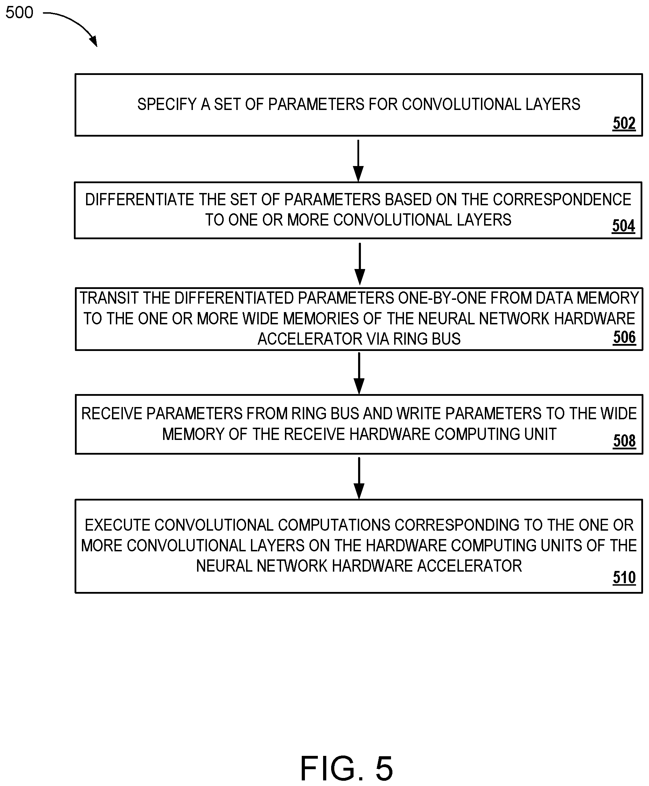

FIG. 5 is an example flow chart of process for performing parameter caching for convolutional neural network layer computation on the neural network hardware accelerator 110. Convolutional layers are a class of feed-forward neural network layers that are suited for operations and computations on two-dimensional data such as images. A convolution is a linear operation that involves multiplication of model parameters, for example, an array of input data and a two-dimensional array of weights. The neural network hardware accelerator 110 delivers the model parameters to one or more wide memories 210 of one or more computing units for a particular convolutional neural network layer computation.

Upon receiving the instructions, the main memory 130 specifies a set of model parameters for one or more convolutional neural network layers (step 502). The model parameters may be transmitted from the host interface 120 and stored in the data memory 204.

The neural network processing system 100 may differentiate the parameters to subset parameters based on the correspondence to one or more convolutional layers (step 504). In some implementations, the subset parameters that corresponds to a particular convolutional neural network layer do not fit in the wide memories of the corresponding computing unit. As a result, the subset parameters are further split and transmitted to more computing units for the convolutional computation.

In the next step, the differentiated subset parameters are transmitted one-by-one from the data memory 204 to the wide memory 210 of the computing units via ring bus 216 (step 506). In some implementations, the parameter caching implementation is in a simple first-come-first-serve manner. In some other implementations, the parameter caching implementation algorithm is fine-tuned for tasks that are more complicated.

The computing units may copy the transmitted subsets parameters and write the subsets of parameters to its wide memory 210 (step 508). In some implementations, based on the subset parameters being not fit to the wide memory 210 of the computing unit, the computing unit receives parameters from adjacent host computing units and stores the parameters to its wide memory 210 for completing a portion of the convolution computation.

After storing the differentiated subset parameters to the corresponding computing units, upon receiving the tensor operation instruction, the computing units start to execute neural network computations corresponding to the one or more convolutional neural network layers (step 510).

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory program carrier for execution by, or to control the operation of, data processing apparatus. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them.

The term "data processing apparatus" encompasses all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a standalone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Computers suitable for the execution of a computer program include, by way of example, can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of nonvolatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To send for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can send input to the computer. Other kinds of devices can be used to send for interaction with a user as well; for example, feedback provided to the user can be any form of sensory feedback, e.g., visual feedback, auditory feedback, or tactile feedback; and input from the user can be received in any form, including acoustic, speech, or tactile input. **In** addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of the claimed invention, but rather as descriptions of features that may be specific to particular embodiments of the claimed invention. Certain features that are described in this specification in the context of separate embodiments can also be implemented in combination in a single embodiment. Conversely, various features that are described in the context of a single embodiment can also be implemented in multiple embodiments separately or in any suitable subcombination.

In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims.

## Claims

1. A method comprising:
obtaining (302) data specifying one or more neural network layers to be deployed on a neural network hardware accelerator (110), each of the one or more neural network layers having a respective set of parameters, and the neural network hardware accelerator (110) comprising a parameter memory (204) and a plurality of hardware computing units (208), each of which is a processing element configured to perform neural network layer computations, and each hardware computing unit comprising one or more local memories (210) having a memory capacity;
storing the one or more sets of parameters in the parameter memory (204);
determining (304) a maximum amount of the memory capacity that will be in use at any one time during a processing of any of the one or more neural network layers by the neural network hardware accelerator (110) by determining an amount of available capacity of local memories (210) of each of the plurality of computing units (208) during the processing;
identifying (306) a subset of the parameters of the one or more neural network layers that consumes an amount of memory that is less than a difference between the memory capacity and the determined maximum amount of the memory capacity;
storing (308) the identified subset of the parameters in at least one of the one or more local memories (210) of the neural network hardware accelerator (110), wherein the identified subset of the parameters is transmitted from the parameter memory (204) to the one or more local memories (210); and
after storing the identified subset of the parameters, causing (310) the neural network hardware accelerator (110) to perform the processing of the one or more neural network layers that require the corresponding identified subset of the parameters;
wherein the one or more local memories (210) of the neural network hardware accelerator (110) provides higher bandwidth than the parameter memory (204) that stores the parameters of the neural network layers; and
wherein each of the plurality of hardware computing units (208) is further configured to perform operations comprising:
executing, by a processor of the respective hardware computing unit, a plurality of instructions from the neural network hardware accelerator; and, selectively, either:
accessing one or more local memories of the respective hardware computing unit, to retrieve the identified subset of the parameters and
sending the identified subset of the parameters to one or more local memories of other hardware computing units of the plurality of hardware computing units of the neural network hardware accelerator, through a ring bus (216); or
storing in one or more local memories of the respective hardware computing unit the identified subset of the parameters from the one or more local memories of one or more other hardware computing units received through the ring bus (216), for execution of neural network computations using the identified subset of the parameters by the respective hardware computing unit.

2. The method of claim 1, further comprising:
determining storage locations of the identified subset of the parameters in the one or more local memories (210) of the neural network hardware accelerator, and
storing each parameter in the identified storage location for the parameter.

3. The method of claim 1, further comprising:
ranking the one or more neural network layers according to a priority; and
identifying the respective set of parameters of a highest-ranked layers of the neural network layers as the subset of the parameters of the one or more neural network layers.

4. The method of claim 1, wherein the one or more neural network layers comprise a fully connected layer, wherein the parameters of the fully connected layer are in the identified subset, wherein the accelerator (110) is configured to distribute the processing of the fully connected layer across a first subset of the hardware computing units, and wherein storing the identified subset comprises:
storing a respective partition of the parameters of the fully connected layer in the one or more local memories (210) of each hardware computing unit in the first subset.

5. The method of claim 1, wherein the one or more neural network layers comprise a convolutional layer, wherein the parameters of the convolutional layer are in the identified subset, wherein the accelerator (110) is configured to distribute the processing of the convolutional layer across a second subset of the hardware computing units, and wherein storing the identified subset comprises:
storing a respective copy of the parameters of the convolutional layer in the one or more local memories (210) of each hardware computing unit in the second subset.

6. A system comprising a neural network hardware accelerator (110), one or more computers and one or more storage devices storing instructions that are operable, when executed by the one or more computers and the neural network hardware accelerator (110), to cause the one or more computers and the neural network hardware accelerator (110) to perform operations comprising:
obtaining (302) data specifying one or more neural network layers to be deployed on a neural network hardware accelerator (110), each of the one or more neural network layers having a respective set of parameters, and the neural network hardware accelerator (110) comprising a parameter memory (204) and a plurality of hardware computing units (208), each of which is a processing element configured to perform neural network layer computations, and each hardware computing unit comprising one or more local memories (210) having a memory capacity;
storing the one or more sets of parameters in the parameter memory (204);
determining (304) a maximum amount of the memory capacity that will be in use at any one time during a processing of any of the one or more neural network layers by the neural network hardware accelerator (110) by determining an amount of available capacity of local memories (210) of each computing unit (208) during the processing;
identifying (306) a subset of the parameters of the one or more neural network layers that consumes an amount of memory that is less than a difference between the memory capacity and the determined maximum amount of the memory capacity;
storing (308) the identified subset of the parameters in at least one of the one or more local memories (210) of the neural network hardware accelerator, wherein the identified subset of the parameters are transmitted from the parameter memory (204) to the one or more local memories (210); and
after storing the identified subset of the parameters, causing (310) the neural network hardware accelerator (110) to perform the processing of the one or more neural network layers that require the corresponding identified subset of the parameters;
wherein the one or local more memories of the neural network hardware accelerator (110) provides higher bandwidth than the parameter memory (204) that stores the parameters of the neural network layers; and
wherein each of the plurality of hardware computing units (208) is further configured to perform operations comprising:
executing, by a processor of the respective hardware computing unit, a plurality of instructions from the neural network hardware accelerator (110); and, selectively, either:
accessing one or more local memories of the respective hardware computing unit, to retrieve the identified subset of the parameters and
sending the identified subset of the parameters to one or more local memories of other hardware computing units of the plurality of hardware computing units of the neural network hardware accelerator, through a ring bus (216); or
storing in one or more local memories of the respective hardware computing unit the identified subset of the parameters from the one or more local memories of one or more other hardware computing units received through the ring bus (216), for execution of neural network computations using the identified subset of the parameters by the respective hardware computing unit.

7. The system of claim 6, further comprising:
determining storage locations of the identified subset of the parameters in the one or more local memories (210) of the neural network hardware accelerator (204), and
storing each parameter in the identified storage location for the parameter.

8. The system of claim 6, further comprising:
ranking the one or more neural network layers according to a priority; and
identifying the respective set of parameters of a highest-ranked layer layers of the neural network layers as the subset of the parameters of the one or more neural network layers.

9. The system of claim 6,
wherein the one or more neural network layers comprise a fully connected layer,
wherein the parameters of the fully connected layer are in the identified subset,
wherein the accelerator (110) is configured to distribute the processing of the fully connected layer across a first subset of the hardware computing units, and
wherein storing the identified subset comprises:
storing a respective partition of the parameters of the fully connected layer in the one or more local memories of each hardware computing unit in the first subset.

10. The system of claim 6,
wherein the one or more neural network layers comprise a convolutional layer,
wherein the parameters of the convolutional layer are in the identified subset,
wherein the accelerator (110) is configured to distribute the processing of the convolutional layer across a second subset of the hardware computing units, and
wherein storing the identified subset comprises:
storing a respective copy of the parameters of the convolutional layer in the one or more local memories of each hardware computing unit in the second subset.

## Patentansprüche

1. Verfahren, umfassend:
Erhalten (302) von Daten, die eine oder mehrere neuronale Netzwerkebenen angeben, die auf einem Hardware-Beschleuniger (110) für neuronale Netzwerke bereitgestellt werden sollen, wobei jede der einen oder mehreren neuronalen Netzwerkebenen einen jeweiligen Parametersatz aufweist und der Hardware-Beschleuniger (110) für neuronale Netzwerke einen Parameterspeicher (204) und eine Mehrzahl von Hardware-Recheneinheiten (208) umfasst, von denen jede ein Verarbeitungselement ist, das zum Ausführen von Berechnungen neuronaler Netzwerkebenen konfiguriert ist, wobei jede Hardware-Recheneinheit einen oder mehrere lokale Speicher (210) mit einer Speicherkapazität umfasst;
Speichern des einen oder der mehreren Parametersätze im Parameterspeicher (204);
Bestimmen (304) einer maximalen Speicherkapazität, die zu einem beliebigen Zeitpunkt während der Verarbeitung einer der einen oder mehreren neuronalen Netzwerkebenen durch den Hardware-Beschleuniger (110) für neuronale Netzwerke genutzt wird, indem eine verfügbare Kapazität der lokalen Speicher (210) jeder Recheneinheit (208) während der Verarbeitung bestimmt wird;
Identifizieren (306) einer Teilmenge der Parameter der einen oder mehreren neuronalen Netzwerkebenen, die eine Speichermenge beansprucht, die kleiner ist als eine Differenz zwischen der Speicherkapazität und der bestimmten maximalen Speicherkapazität;
Speichern (308) der identifizierten Teilmenge der Parameter in mindestens einem der einen oder mehreren lokalen Speicher (210) des Hardware-Beschleunigers (110) für neuronale Netzwerke, wobei die identifizierte Teilmenge der Parameter vom Parameterspeicher (204) an die einen oder mehreren lokalen Speichern (210) übertragen wird; und
Veranlassen (310) des Hardware-Beschleunigers (110) für neuronale Netzwerke, nach dem Speichern der identifizierten Teilmenge der Parameter, die Verarbeitung der einen oder mehreren Netzwerkebenen durchzuführen, die die entsprechende identifizierte Teilmenge der Parameter erfordern;
wobei die einen oder mehreren lokalen Speicher (210) des Hardware-Beschleunigers (110) für neuronale Netzwerke eine höhere Bandbreite bereitstellen als der Parameterspeicher (204), der die Parameter der neuronalen Netzwerkebenen speichert; und
wobei jede der Mehrzahl von Hardware-Recheneinheiten (208) ferner so konfiguriert ist, dass sie Operationen ausführt, die folgende Schritte umfassen:
Ausführen einer Mehrzahl von Instruktionen des Hardware-Beschleunigers für neuronale Netzwerke durch einen Prozessor der jeweiligen Hardware-Recheneinheit; und wahlweise entweder:
Zugreifen auf einen oder mehrere lokale Speicher der jeweiligen Hardware-Recheneinheit, um die identifizierte Teilmenge der Parameter abzurufen, und
Senden der identifizierten Teilmenge der Parameter an einen oder mehrere lokale Speicher anderer Hardware-Recheneinheiten der Mehrzahl von Hardware-Recheneinheiten des Hardware-Beschleunigers für neuronale Netzwerke über einen Ringbus (216); oder
Speichern der identifizierten Teilmenge der Parameter aus den einen oder mehreren lokalen Speichern einer oder mehrerer anderer Hardware-Recheneinheiten, die über den Ringbus (216) empfangen wurden, in einem oder mehreren lokalen Speichern der jeweiligen Hardware-Recheneinheit, um Berechnungen des neuronalen Netzwerks unter Verwendung der identifizierten Teilmenge der Parameter durch die jeweilige Hardware-Recheneinheit auszuführen.

2. Verfahren nach Anspruch 1, ferner umfassend:
Bestimmen der Speicherorte der identifizierten Teilmenge der Parameter in den einen oder mehreren lokalen Speichern (210) des Hardware-Beschleunigers für neuronale Netzwerke; und
Speichern jedes Parameters an dem jeweils bestimmten Speicherort für den Parameter.

3. Verfahren nach Anspruch 1, ferner umfassend:
Einstufen der einen oder mehreren neuronalen Netzwerkebenen entsprechend einer Priorität; und
Identifizieren des jeweiligen Parametersatzes der höchstrangigen Ebene der neuronalen Netzwerkebenen als die Teilmenge der Parameter der einen oder mehreren neuronalen Netzwerkebenen.

4. Verfahren nach Anspruch 1, wobei die einen oder mehreren neuronalen Netzwerkebenen eine vollständig verbundene Ebene umfassen, wobei die Parameter der vollständig verbundenen Ebene in der identifizierten Teilmenge enthalten sind, wobei der Beschleuniger (110) so konfiguriert ist, dass er die Verarbeitung der vollständig verbundenen Ebene auf eine erste Teilmenge der Hardware-Recheneinheiten verteilt, und wobei das Speichern der identifizierten Teilmenge Folgendes umfasst:
Speichern einer jeweiligen Partition der Parameter der vollständig verbundenen Ebene in den einen oder mehreren lokalen Speichern (210) jeder Hardware-Recheneinheit der ersten Teilmenge.

5. Verfahren nach Anspruch 1, wobei die einen oder mehreren neuronalen Netzwerkebenen eine Faltungsebene umfassen, wobei die Parameter der Faltungsebene in der identifizierten Teilmenge enthalten sind, wobei der Beschleuniger (110) so konfiguriert ist, dass er die Verarbeitung der Faltungsebene auf eine zweite Teilmenge der Hardware-Recheneinheiten verteilt, und wobei das Speichern der identifizierten Teilmenge Folgendes umfasst:
Speichern einer jeweiligen Kopie der Parameter der Faltungsebene in den einen oder mehreren lokalen Speichern (210) jeder Hardware-Recheneinheit der zweiten Teilmenge.

6. System, umfassend einen Hardware-Beschleuniger (110) für neuronale Netzwerke, einen oder mehrere Computer und eine oder mehrere Speichervorrichtungen, die Instruktionen speichern, die, wenn sie von dem einen oder mehreren Computern und dem Hardware-Beschleuniger (110) für neuronale Netzwerke ausgeführt werden, die einen oder mehreren Computer und den Hardware-Beschleuniger (110) für neuronale Netzwerke veranlassen, Operationen durchzuführen, die Folgendes umfassen:
Erhalten (302) von Daten, die eine oder mehrere neuronale Netzwerkebenen angeben, die auf einem Hardware-Beschleuniger (110) für neuronale Netzwerke bereitgestellt werden sollen, wobei jede der einen oder mehreren neuronalen Netzwerkebenen einen jeweiligen Parametersatz aufweist und der Hardware-Beschleuniger (110) für neuronale Netzwerke einen Parameterspeicher (204) und eine Mehrzahl von Hardware-Recheneinheiten (208) umfasst, von denen jede ein Verarbeitungselement ist, das zum Ausführen von Berechnungen neuronaler Netzwerkebenen konfiguriert ist, wobei jede Hardware-Recheneinheit einen oder mehrere lokale Speicher (210) mit einer Speicherkapazität umfasst;
Speichern des einen oder der mehreren Parametersätze im Parameterspeicher (204);
Bestimmen (304) einer maximalen Speicherkapazität, die zu einem beliebigen Zeitpunkt während der Verarbeitung einer der einen oder mehreren neuronalen Netzwerkebenen durch den Hardware-Beschleuniger (110) für neuronale Netzwerke genutzt wird, indem eine verfügbare Kapazität der lokalen Speicher (210) jeder Recheneinheit (208) während der Verarbeitung bestimmt wird;
Identifizieren (306) einer Teilmenge der Parameter der einen oder mehreren neuronalen Netzwerkebenen, die eine Speichermenge beansprucht, die kleiner ist als eine Differenz zwischen der Speicherkapazität und der bestimmten maximalen Speicherkapazität;
Speichern (308) der identifizierten Teilmenge der Parameter in mindestens einem der einen oder mehreren lokalen Speicher (210) des Hardware-Beschleunigers für neuronale Netzwerke, wobei die identifizierte Teilmenge der Parameter vom Parameterspeicher (204) an die einen oder mehreren lokalen Speichern (210) übertragen wird; und
Veranlassen (310) des Hardware-Beschleunigers (110) für neuronale Netzwerke, nach dem Speichern der identifizierten Teilmenge der Parameter, die Verarbeitung der einen oder mehreren Netzwerkebenen durchzuführen, die die entsprechende identifizierte Teilmenge der Parameter erfordern;
wobei die einen oder mehreren lokalen Speicher des Hardware-Beschleunigers (110) für neuronale Netzwerke eine höhere Bandbreite bereitstellen als der Parameterspeicher (204), der die Parameter der neuronalen Netzwerkebenen speichert; und
wobei jede der Mehrzahl von Hardware-Recheneinheiten (208) ferner so konfiguriert ist, dass sie Operationen ausführt, die Folgendes umfassen:
Ausführen einer Mehrzahl von Instruktionen des Hardware-Beschleunigers (110) für neuronale Netzwerke durch einen Prozessor der jeweiligen Hardware-Recheneinheit; und wahlweise entweder:
Zugreifen auf einen oder mehrere lokale Speicher der jeweiligen Hardware-Recheneinheit, um die identifizierte Teilmenge der Parameter abzurufen, und
Senden der identifizierten Teilmenge der Parameter an einen oder mehrere lokale Speicher anderer Hardware-Recheneinheiten der Mehrzahl von Hardware-Recheneinheiten des Hardware-Beschleunigers für neuronale Netzwerke über einen Ringbus (216); oder
Speichern der identifizierten Teilmenge der Parameter aus den einen oder mehreren lokalen Speichern einer oder mehrerer anderer Hardware-Recheneinheiten, die über den Ringbus (216) empfangen wurden, in einem oder mehreren lokalen Speichern der jeweiligen Hardware-Recheneinheit, um Berechnungen des neuronalen Netzwerks unter Verwendung der identifizierten Teilmenge der Parameter durch die jeweilige Hardware-Recheneinheit auszuführen.

7. System nach Anspruch 6, ferner umfassend:
Bestimmen der Speicherorte der identifizierten Teilmenge der Parameter in den einen oder mehreren lokalen Speichern (210) des Hardware-Beschleunigers (204) für neuronale Netzwerke; und
Speichern jedes Parameters an dem jeweils bestimmten Speicherort für den Parameter.

8. System nach Anspruch 6, ferner umfassend:
Einstufen der einen oder mehreren neuronalen Netzwerkebenen entsprechend einer Priorität; und
Identifizieren des jeweiligen Parametersatzes der höchstrangigen Ebene der neuronalen Netzwerkebenen als die Teilmenge der Parameter der einen oder mehreren neuronalen Netzwerkebenen.

9. System nach Anspruch 6,
wobei die einen oder mehreren neuronalen Netzwerkebenen eine vollständig verbundene Ebene umfassen,
wobei die Parameter der vollständig verbundenen Ebene in der identifizierten Teilmenge enthalten sind,
wobei der Beschleuniger (110) so konfiguriert ist, dass er die Verarbeitung der vollständig verbundenen Ebene auf eine erste Teilmenge der Hardware-Recheneinheiten verteilt, und
wobei das Speichern der identifizierten Teilmenge Folgendes umfasst:
Speichern einer jeweiligen Partition der Parameter der vollständig verbundenen Ebene in den einen oder mehreren lokalen Speichern jeder Hardware-Recheneinheit der ersten Teilmenge.

10. System nach Anspruch 6,
wobei die einen oder mehreren neuronalen Netzwerkebenen eine Faltungsebene umfassen,
wobei die Parameter der Faltungsebene in der identifizierten Teilmenge enthalten sind,
wobei der Beschleuniger (110) so konfiguriert ist, dass er die Verarbeitung der Faltungsebene auf eine zweite Teilmenge der Hardware-Recheneinheiten verteilt, und
wobei das Speichern der identifizierten Teilmenge Folgendes umfasst:
Speichern einer jeweiligen Kopie der Parameter der Faltungsebene in den einen oder mehreren lokalen Speichern jeder Hardware-Recheneinheit der zweiten Teilmenge.

## Revendications

1. Procédé comprenant :
l'obtention (302) de données spécifiant une ou plusieurs couches de réseau neuronal à déployer sur un accélérateur matériel de réseau neuronal (110), chacune des une ou plusieurs couches de réseau neuronal ayant un ensemble respectif de paramètres, et l'accélérateur matériel de réseau neuronal (110) comprenant une mémoire de paramètres (204) et une pluralité d'unités de calcul matérielles (208), dont chacune est un élément de traitement configuré pour réaliser des calculs de couche de réseau neuronal, et chaque unité de calcul matérielle comprenant une ou plusieurs mémoires locales (210) ayant une capacité de mémoire ;
le stockage des un ou plusieurs ensembles de paramètres dans la mémoire de paramètres (204) ;
la détermination (304) d'une quantité maximale de la capacité de mémoire qui sera utilisée à tout moment pendant un traitement de l'une quelconque des une ou plusieurs couches de réseau neuronal par l'accélérateur matériel de réseau neuronal (110) en déterminant une quantité de capacité disponible de mémoires locales (210) de chacune de la pluralité d'unités de calcul (208) pendant le traitement ;
l'identification (306) d'un sous-ensemble des paramètres des une ou plusieurs couches de réseau neuronal qui consomme une quantité de mémoire qui est inférieure à une différence entre la capacité de mémoire et la quantité maximale déterminée de la capacité de mémoire ;
le stockage (308) du sous-ensemble identifié des paramètres dans au moins l'une des une ou plusieurs mémoires locales (210) de l'accélérateur matériel de réseau neuronal (110), dans lequel le sous-ensemble identifié des paramètres est transmis de la mémoire de paramètres (204) aux une ou plusieurs mémoires locales (210) ; et
après avoir stocké le sous-ensemble identifié des paramètres, le fait d'amener (310) l'accélérateur matériel de réseau neuronal (110) à réaliser le traitement des une ou plusieurs couches de réseau neuronal qui nécessitent le sous-ensemble identifié correspondant des paramètres ;
dans lequel les une ou plusieurs mémoires locales (210) de l'accélérateur matériel de réseau neuronal (110) fournissent une bande passante supérieure à celle de la mémoire de paramètres (204) qui stocke les paramètres des couches de réseau neuronal ; et
dans lequel chacune de la pluralité d'unités matérielles de calcul (208) est également configurée pour réaliser des opérations comprenant :
l'exécution, par un processeur de l'unité de calcul matérielle respective, d'une pluralité d'instructions provenant de l'accélérateur matériel de réseau neuronal ; et, sélectivement, soit :
l'accession à une ou plusieurs mémoires locales de l'unité de calcul matérielle respective, pour récupérer le sous-ensemble identifié des paramètres et
l'envoi du sous-ensemble identifié des paramètres à une ou plusieurs mémoires locales d'autres unités de calcul matérielles de la pluralité d'unités de calcul matérielles de l'accélérateur matériel de réseau neuronal, via un bus en anneau (216) ; soit le stockage dans une ou plusieurs mémoires locales de l'unité de calcul matérielle respective du sous-ensemble identifié des paramètres provenant des une ou plusieurs mémoires locales d'une ou plusieurs autres unités de calcul matérielles reçues via le bus en anneau (216), pour l'exécution de calculs de réseau neuronal utilisant le sous-ensemble identifié des paramètres par l'unité de calcul matérielle respective.

2. Procédé selon la revendication 1, comprenant également :
la détermination d'emplacements de stockage du sous-ensemble identifié des paramètres dans les une ou plusieurs mémoires locales (210) de l'accélérateur matériel de réseau neuronal, et le stockage de chaque paramètre dans l'emplacement de stockage identifié pour le paramètre.

3. Procédé selon la revendication 1, comprenant également :
le classement des une ou plusieurs couches de réseau neuronal selon une priorité ; et
l'identification de l'ensemble respectif de paramètres d'une couches les mieux classées des couches de réseau neuronal comme le sous-ensemble des paramètres des une ou plusieurs couches de réseau neuronal.

4. Procédé selon la revendication 1, dans lequel les une ou plusieurs couches de réseau neuronal comprennent une couche entièrement connectée, dans lequel les paramètres de la couche entièrement connectée sont compris dans le sous-ensemble identifié, dans lequel l'accélérateur (110) est configuré pour répartir le traitement de la couche entièrement connectée sur un premier sous-ensemble d'unités de calcul matérielles, et dans lequel le stockage du sous-ensemble identifié comprend :
le stockage d'une partition respective des paramètres de la couche entièrement connectée dans les une ou plusieurs mémoires locales (210) de chaque unité de calcul matérielle dans le premier sous-ensemble.

5. Procédé selon la revendication 1, dans lequel les une ou plusieurs couches de réseau neuronal comprennent une couche de convolution, dans lequel les paramètres de la couche de convolution sont dans le sous-ensemble identifié, dans lequel l'accélérateur (110) est configuré pour répartir le traitement de la couche de convolution sur un second sous-ensemble d'unités de calcul matérielles, et dans lequel le stockage du sous-ensemble identifié comprend :
le stockage d'une copie respective des paramètres de la couche de convolution dans les une ou plusieurs mémoires locales (210) de chaque unité de calcul matérielle dans le second sous-ensemble.

6. Système comprenant un accélérateur matériel de réseau neuronal (110), un ou plusieurs ordinateurs et un ou plusieurs dispositifs de stockage stockant des instructions qui sont utilisables, lorsqu'elles sont exécutées par les un ou plusieurs ordinateurs et l'accélérateur matériel de réseau neuronal (110), pour amener les un ou plusieurs ordinateurs et l'accélérateur matériel de réseau neuronal (110) à réaliser des opérations comprenant :
l'obtention (302) de données spécifiant une ou plusieurs couches de réseau neuronal à déployer sur un accélérateur matériel de réseau neuronal (110), chacune des une ou plusieurs couches de réseau neuronal ayant un ensemble respectif de paramètres, et l'accélérateur matériel de réseau neuronal (110) comprenant une mémoire de paramètres (204) et une pluralité d'unités de calcul matérielles (208), dont chacune est un élément de traitement configuré pour réaliser des calculs de couche de réseau neuronal, et chaque unité de calcul matérielle comprenant une ou plusieurs mémoires locales (210) ayant une capacité de mémoire ;
le stockage des un ou plusieurs ensembles de paramètres dans la mémoire de paramètres (204) ;
la détermination (304) d'une quantité maximale de la capacité de mémoire qui sera utilisée à tout moment pendant un traitement de l'une quelconque des une ou plusieurs couches de réseau neuronal par l'accélérateur matériel de réseau neuronal (110) en déterminant une quantité de capacité disponible des mémoires locales (210) de chacune de la pluralité d'unités de calcul (208) pendant le traitement ;
l'identification (306) d'un sous-ensemble des paramètres des une ou plusieurs couches de réseau neuronal qui consomme une quantité de mémoire qui est inférieure à une différence entre la capacité de mémoire et la quantité maximale déterminée de la capacité de mémoire ;
le stockage (308) du sous-ensemble identifié des paramètres dans au moins l'une des une ou plusieurs mémoires locales (210) de l'accélérateur matériel de réseau neuronal, dans lequel le sous-ensemble identifié des paramètres sont transmis de la mémoire de paramètres (204) aux une ou plusieurs mémoires locales (210) ; et
après avoir stocké le sous-ensemble identifié des paramètres, le fait d'amener (310) l'accélérateur matériel de réseau neuronal (110) à réaliser le traitement des une ou plusieurs couches de réseau neuronal qui nécessitent le sous-ensemble identifié correspondant des paramètres ;
dans lequel les une ou plusieurs mémoires locales de l'accélérateur matériel de réseau neuronal (110) fournissent une bande passante supérieure à celle de la mémoire de paramètres (204) qui stocke les paramètres des couches de réseau neuronal ; et
dans lequel chacune de la pluralité d'unités matérielles de calcul (208) est également configurée pour réaliser des opérations comprenant :
l'exécution, par un processeur de l'unité de calcul matérielle respective, d'une pluralité d'instructions provenant de l'accélérateur matériel de réseau neuronal (110) ; et, sélectivement, soit :
l'accession à une ou plusieurs mémoires locales de l'unité de calcul matérielle respective, pour récupérer le sous-ensemble identifié des paramètres et
l'envoi du sous-ensemble identifié des paramètres à une ou plusieurs mémoires locales d'autres unités de calcul matérielles de la pluralité d'unités de calcul matérielles de l'accélérateur matériel de réseau neuronal, via un bus en anneau (216) ; soit le stockage dans une ou plusieurs mémoires locales de l'unité de calcul matérielle respective du sous-ensemble identifié des paramètres provenant des une ou plusieurs mémoires locales d'une ou plusieurs autres unités de calcul matérielles reçues via le bus en anneau (216), pour l'exécution de calculs de réseau neuronal utilisant le sous-ensemble identifié des paramètres par l'unité de calcul matérielle respective.

7. Système selon la revendication 6, comprenant également :
la détermination d'emplacements de stockage du sous-ensemble identifié des paramètres dans les une ou plusieurs mémoires locales (210) de l'accélérateur matériel de réseau neuronal (204), et
le stockage de chaque paramètre dans l'emplacement de stockage identifié pour le paramètre.

8. Système selon la revendication 6, comprenant également :
le classement des une ou plusieurs couches de réseau neuronal selon une priorité ; et
l'identification de l'ensemble respectif de paramètres d'une couche la mieux classée des couches de réseau neuronal comme le sous-ensemble des paramètres des une ou plusieurs couches de réseau neuronal.

9. Système selon la revendication 6,
dans lequel les une ou plusieurs couches de réseau neuronal comprennent une couche entièrement connectée,
dans lequel les paramètres de la couche entièrement connectée sont dans le sous-ensemble identifié,
dans lequel l'accélérateur (110) est configuré pour répartir le traitement de la couche entièrement connectée sur un premier sous-ensemble des unités de calcul matérielles, et
dans lequel le stockage du sous-ensemble identifié comprend :
le stockage d'une partition respective des paramètres de la couche entièrement connectée dans les une ou plusieurs mémoires locales de chaque unité de calcul matérielle dans le premier sous-ensemble.

10. Système selon la revendication 6,
dans lequel les une ou plusieurs couches de réseau neuronal comprennent une couche de convolution,
dans lequel les paramètres de la couche de convolution sont dans le sous-ensemble identifié,
dans lequel l'accélérateur (110) est configuré pour répartir le traitement de la couche de convolution sur un second sous-ensemble des unités de calcul matérielles, et
dans lequel le stockage du sous-ensemble identifié comprend :
le stockage d'une copie respective des paramètres de la couche de convolution dans les une ou plusieurs mémoires locales de chaque unité de calcul matérielle dans le second sous-ensemble.
